# EUROPÄISCHE PATENTANMELDUNG

(11) **EP 1 587 198 A1**
(43) Veröffentlichungstag der Anmeldung: **19.10.2005**
(21) Anmeldenummer: 05005869.2
(22) Anmeldetag: 17.03.2005
(51) Int. Cl.: H02G 3/14

(54) **Abdeckrahmenaufbau**

(30) Priorität: 16.04.2004 DE 102004018649
(71) Anmelder: Heinrich Kopp GmbH, 63796 Kahl am Main (DE)
(72) Erfinder: Fleckenstein, Hans-Jürgen, 63776 Mömbris (DE); Schmitt, Emil, 63776 Mömbris (DE)
(74) Vertreter: Reinhard - Skuhra - Weise & Partner

(57) **Zusammenfassung**

Zum Ausgleich unterschiedlicher Dosenabschnitte von unter Putz zu installierenden elektrischen Geräten wie Steckdose, Schalter und dergleichen ist ein Abdeckrahmenaufbau vorgesehen, der einen stufenlosen Ausgleich des Dosenabstands vorsieht und in jeder Mehrfachkombination aus einzelnen Modulen hergestellt werden kann. Für den stufenlosen Ausgleich zwischen zwei Modulen (10, 30) sind Steckanschlußabschnitte (18) mit wechselseitig überlappenden Abdeckprofilen (19, 20) vorgesehen.

## Beschreibung

Die Erfindung betrifft einen Abdeckrahmenaufbau für unter Putz installierbare elektrische Geräte.

Wenn elektrische Geräte, wie beispielsweise Steckdosen, Schalter und dergleichen unter Putz installiert sind, werden sie anschließend mittels eines Abdeckrahmens abgedeckt. Dieser Abdeckrahmen dient auch dazu, mehrere nebeneinander angeordnete elektrische Geräte gleichzeitig abzudecken. In der Praxis besteht jedoch das Problem, daß der Abstand zwischen Wanddosen, in die elektrische Geräte unter Putz eingesetzt werden, bei ungenauer Montage oder durch Einputzen variieren kann. Dies führt dazu, daß bei Mehrfachkombinationen von elektrischen Geräten der wechselseitige Abstand unterschiedlich groß ausfallen kann und dann das Problem besteht, daß Mehrfachabdeckrahmen, die über einen festgelegten Abstand der Gehäuseausschnitte verfügen (Normmaß 71 mm) nicht richtig passen und bei ihrer nicht deckungsgleichen Montage Funktionsbeeinträchtigungen auftreten können. Bisher ist in solchen Fällen eine zeitaufwendige Korrektur der Vorinstallation erforderlich, um jeweils den durch den Geräteausschnitt in dem Mehrfachabdeckrahmen vorgegebenen wechselseitigen Abstand der elektrischen Geräte, wie Schalter, Steckdosen und dergleichen genau herzustellen, wodurch sich nicht nur der Installationsaufwand, sondern auch die Installationskosten erheblich vergrößern.

Hinzu kommt, daß jeweils für jede Anzahl kombinierter elektrischer Geräte spezielle Abdeckrahmen erforderlich sind, deren Herstellung sich bei Rahmen mit mehr als drei Geräteausschnitten in der Regel wegen Unwirtschaftlichkeit nicht amortisiert.

Der Erfindung liegt demgemäß die Aufgabe zugrunde, einen Abdeckrahmenaufbau für unter Putz installierbare elektrische Geräte verfügbar zu machen, der für eine beliebige Anzahl von elektrischen Installationsgeräten in Unterputz-Mehrfachkombinationen realisiert werden und der auch bei geringfügiger Abweichung wechselseitiger Dosenabstände eingesetzt werden kann.

Erfindungsgemäß wird diese Aufgabe durch die im Patentanspruch 1 genannten Merkmale gelöst.

Bevorzugte Merkmale, die die Erfindung vorteilhaft weiterbilden, sind den nachgeordneten Patentansprüchen zu entnehmen.

Vorteilhaft wird aufgrund der Erfindung ein Abdeckrahmenaufbau in Form eines MehrfachAbdeckrahmens in Modulbauweise verfügbar gemacht, wobei für den Aufbau jeder beliebigen Anzahl von abzudeckenden Dosen vorteilhaft nur zwei Modularten benötigt werden, ein Grundteilmodul und ein Mittelteilmodul. Das Grundteilmodul dient dabei als Anfangs- und als Endstück eines Mehrfachabdeckrahmens, während das Mittelteilmodul in beliebiger Zahl zwischen zwei Grundmodulen durch die vorgesehenen Steckanschlußabschnitte so eingesetzt werden kann, daß nicht nur eine beliebige Anzahl von einzelnen Abdeckungsrahmen, sondern auch vorteilhaft eine veränderbare Einstecktiefe unter Abdeckung des Bereichs zwischen benachbarten Modulen ermöglicht werden kann.

Die als Anfangs- und als Endstück vorgesehenen Grundteilmodule sind vorzugsweise Gleichteile und um 180° versetzt zueinander deckungsgleich, während die als Mittelstück fungierenden Mitteilteilmodule zueinander und zu den Anfangs- bzw. Endstücken bzw. Grundmodulen kompatibel sind. Durch die Ausbildung eines vorteilhaften ineinanderfügbaren Steckkontur mit gleichzeitiger Überlappung im Bereich der Stoßstelle zwischen den einzelnen Modulen läßt sich vorteilhaft über einen bestimmten Bereich der Modul- bzw. Geräteabstand variabel einstellen. Diese Einstellung kann vorzugsweise stufenlos reibschlüssig bzw. mit klemmendem Eingriff oder auch in bestimmten Raststufen von beispielsweise 0,5 mm mit entsprechenden Verrastungen vorgenommen werden.

Für die reibschlüssige Steckverbindung sind vorteilhaft die Steckkonturen jedes Steckanschlußabschnitts mit einem bestimmten Übermaß derart hergestellt, daß der Mehrfachrahmen in der gewünschten Konfiguration durch Klemmkraft zusammengehalten wird.

Besonders vorteilhaft ist der Einsatz des erfindungsgemäßen Abdeckrahmenaufbaus bei ungenauer Installation der Geräteeinsätze, da ein variabler stufenlos anpaßbarer Geräte- bzw. Modulabstand ermöglicht werden kann, wobei sich jeder einzelne Abdeckrahmenmodul auf den darunter montierten Geräteeinsatz zentrieren kann. Vorteilhaft ergeben durch das erfindungsgemäße Konzept mehrere Abdeckrahmenmodule ein einheitliches Bild für den erzeugten Mehrfachabdeckrahmen, auch wenn geringfügig abweichende Geräteabstände vorliegen. Vorteilhaft ist beispielsweise ein stufenloser Ausgleich des Dosenabstand von 70 bis 75 mm möglich.

Ein weiterer wesentlicher Vorteil des erfindungsgemäßen Abdeckrahmenaufbaus ist eine geringere Lager- und Vorratshaltung, weil nur zwei verschiedene Module erforderlich sind. Auch bauseitig ist der Einsatz des Abdeckrahmenaufbaus als Mehrfachabdeckrahmen dahingehend günstig, weil vor Ort jede beliebige Anzahl der Module zu einem erforderlichen Mehrfach-Abdeckrahmen zusammengesteckt werden kann.

Die Steckanschlußprofile zweier aneinandergesteckter Rahmenmodule weisen gemäß einer bevorzugten weiteren Ausgestaltung der Erfindung wechselseitig überlappende Abdeckprofile mit der Folge auf, daß stets eine rahmenseitige Abdeckung auch größerer Abstände von unter Putz installierten elektrischen Geräten möglich ist und stets ein einheitliches Abdeckrahmenbild entsteht.

Gemäß einer bevorzugten weiteren Ausgestaltung der Erfindung ist jeder Steckanschlußabschnitt mit einem vorzugsweise seitlich vorstehenden Einsteckprofil, einem sich daran anschließenden, bis zur Hälfte der Seite erstreckenden flächig vorstehenden Abdeckprofil, einer komplementären Ausnehmung für die Aufnahme des flächigen Abdeckprofils des nächsten Moduls und einem komplementären Aufnahmeprofil für das Einsteckprofil des nächsten Moduls versehen. Der Querschnitt der Einsteckprofile und der komplementären Aufnahmeprofile ist dabei in jeder geeigneten Profilform möglich, wobei nur gewährleistet sein muß, daß ein reibschlüssiger oder verrastender wechselseitiger Eingriff mit ausreichender Führung vorliegt und das Einsteckprofil an die flächige Gestaltung des Zwischenbereichs zwischen zwei Modulen paßt.

Damit vorteilhaft ein einheitliches Erscheinungsbild gewahrt ist, ist nach einer weiteren vorteilhaften Ausgestaltung der Erfindung vorgesehen, daß die Steck- bzw. Verbindungsabschnitte jedes Steckanschlußprofils unterhalb der Abdeckrahmenoberfläche angeordnet sind. Hierdurch läßt sich durch ein hälftiges Ineinanderschieben dieses Gesamtbild für den Abdeckrahmen beibehalten.

Gemäß einer weiteren bevorzugten Ausgestaltung der Erfindung ist die Breite des Rahmens jedes Moduls an jeder Seite, an der ein Einsteckanschlußabschnitt gebildet ist, etwa auf die Hälfte der sonstigen Rahmenbreite reduziert. Hierdurch wird bei direkt aneinandergefügten Modulen ein Abdeckrahmen mit konstanter Rahmenbreite über den gesamten Umfang jedes Moduls verwirklicht.

Das Grundteilmodul und das Mittelteilmodul sind bevorzugt annähernd quadratisch ausgebildet, wobei das Einsteckprofil vorzugsweise im Randbereich jedes Moduls gebildet ist. Weiterhin ist bevorzugt vorgesehen, daß das Einsteckprofil eine flächige Oberseite aufweist, die bündig mit der Fläche des daran angrenzenden Abdeckprofils verläuft.

Nachfolgend wird die Erfindung unter Bezugnahme auf die beigefügten Zeichnungen näher erläutert. Es zeigen:
- Figur 1: eine schräge perspektivische Draufsicht auf ein Ausführungsbeispiel eines Grundteilmoduls;
- Figur 2: drei verschiedene Zweifachabdeckrahmenaufbauten mit überbrückten unterschiedlichen Rahmenöffnungsabständen;
- Figur 3: eine Darstellung eines Zweifachabdeckrahmenaufbaus, der zwei nebeneinander angeordnete Unterputzgeräte mit größerem Geräteabstand als nach dem Standard vorgesehen abdeckt;
- Figur 4: eine perspektivische Draufsicht auf zwei Grundteilmodule und ein Mittelteilmodul vor ihrem Zusammenstecken zu einem Mehrfachabdeckrahmen;
- Figur 5: die Module von Figur 4 nach dem Zusammenstecken, wobei zwischen benachbarten Modulen unterschiedliche Abstände überbrückt werden;
- Figur 6: einen Abdeckrahmenaufbau für das Abdecken von fünf elektrischen Unterputzinstallationsgeräten vor dem Zusammenstecken der einzelnen Module; und
- Figur 7: den Fünffachabdeckrahmen mit zusammengesteckten Modulen gemäß Figur 6, wobei zwischen aneinandergrenzenden Modulen unterschiedliche Abstände überbrückt werden.

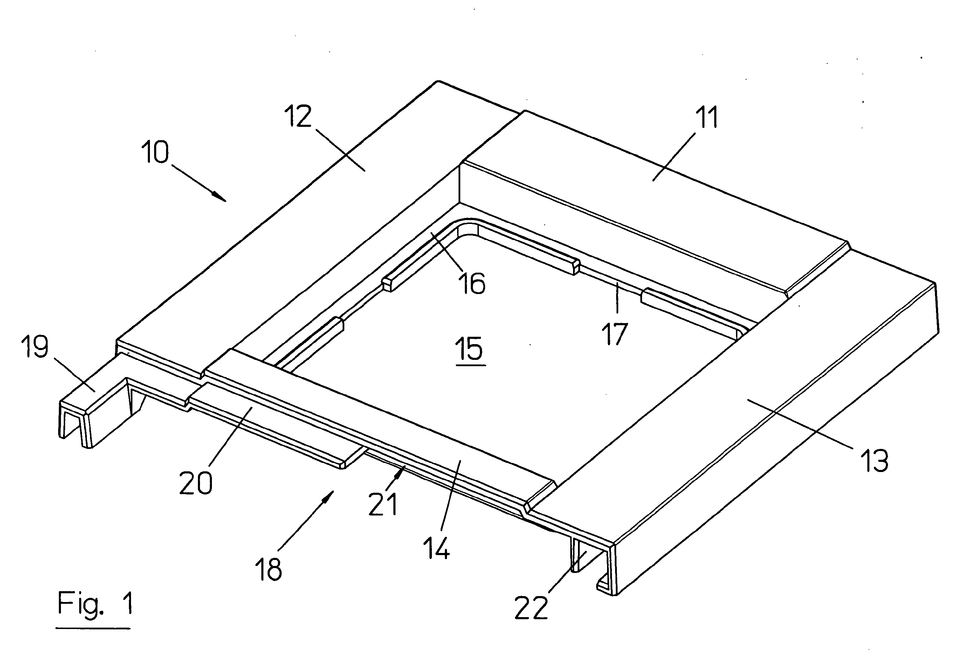

In Figur 1 ist ein Grundteilmodul 10 in perspektivischer Ansicht dargestellt, das als Anfangs- und als Endstück für einen Mehrfachabdeckrahmenaufbau vorgesehen ist. Das Grundteilmodul 10 ist annähernd quadratisch mit einem Endrahmenprofilabschnitt 11, zwei Seitenrahmenprofilabschnitten 12 und 13 und einem Anschlußrahmenprofilabschnitt 14 gebildet, die aneinander grenzen und einen Rahmenausschnitt 15 begrenzen, der für den Einsatz des elektrischen Unterputzgerätes vorgesehen ist und der einen umlaufenden Halterand 16 mit Installationsausnehmungen 17 zur Befestigung des Abdeckrahmens mittels eines umlaufenden Randes des Installationsgerätes aufweist.

Die Breite der Rahmenprofilabschnitte 11 bis 13 ist annähernd gleich, während der Rahmenprofilabschnitt 14 nur etwa die Hälfte der Breite der Rahmenprofilabschnitte 11 bzw. 12 aufweist. Die Rahmenprofilabschnitte sind an ihrer Oberseite bei diesem Ausführungsbeispiel eben ausgebildet, wobei die Rahmenprofilabschnitte 11 und 14 geringfügig über die Oberfläche der Rahmenprofilabschnitte 12 und 13 erhaben ausgebildet sind.

An der vorderen Seite des Grundteilmoduls 10 ist ein Steckanschlußabschnitt 18 angeformt. Der Steckanschlußabschnitt 18 besteht aus einem randseitig vorstehenden Einsteckprofil 19, einem sich daran bis zur Hälfte der Anschlußseite erstreckenden flächig vorstehenden Abdeckprofil 20, einer komplementären Ausnehmung 21 für die Aufnahme des flächigen Abdeckprofils des nächsten Moduls, und aus einem Außahmeprofil 22, das komplementär zu der Außenkontur des Einsteckprofils 19 ausgebildet ist. Die für die Steckverbindung mit einem komplementär ausgebildeten Steckanschlußabschnitt vorgesehenen Verbindungselemente 19, 20, 21 und 22 sind unterhalb der oberen Rahmenfläche der Rahmenprofilabschnitte 11 bis 13 angeordnet, wobei die Anordnung so getroffen ist, daß die wechselseitig vorgesehenen Abdeckprofile 20 den Abstand zwischen zwei Seitenprofilabschnitten 14 aneinanderstoßend überbrücken, so daß sich auch bei voneinander beabstandeten Seitenprofilrahmenabschnitten 14 stets ein geschlossenes Rahmenbild ergibt. Hierzu trägt auch die oberseitige und außenseitige Ausbildung des Einsteckprofils 19 bei.

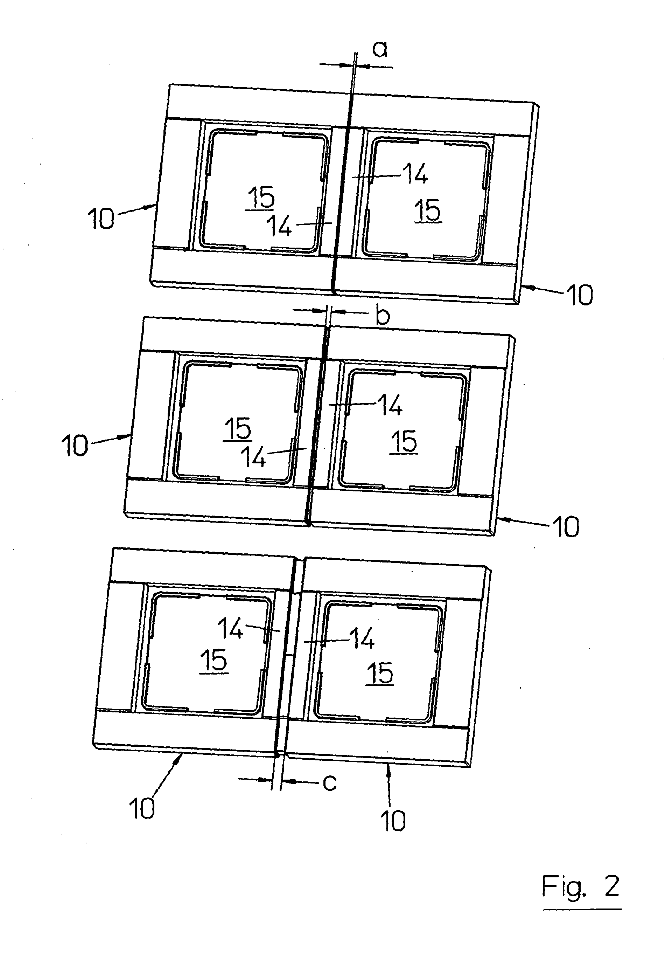

In Figur 2 sind verschiedene Zweifachabdeckrahmenaufbauten mit unterschiedlichen überbrückten Abständen zwischen den Abdeckrahmenöffnungen 15 bzw. den zueinander weisenden Rahmenprofilabschnitten 14 dargestellt, wobei die unterschiedlichen Abstände bei den Mehrfachrahmen mit a, b und c angegeben sind. Der Zweifachabdeckrahmenaufbau in Figur 2 besteht aus zwei Grundteilmodulen 10, wie in Figur 1 dargestellt, die mit ihren komplementären Steckanschlußabschnitten 18 unterschiedlich tief zusammengesteckt sind.

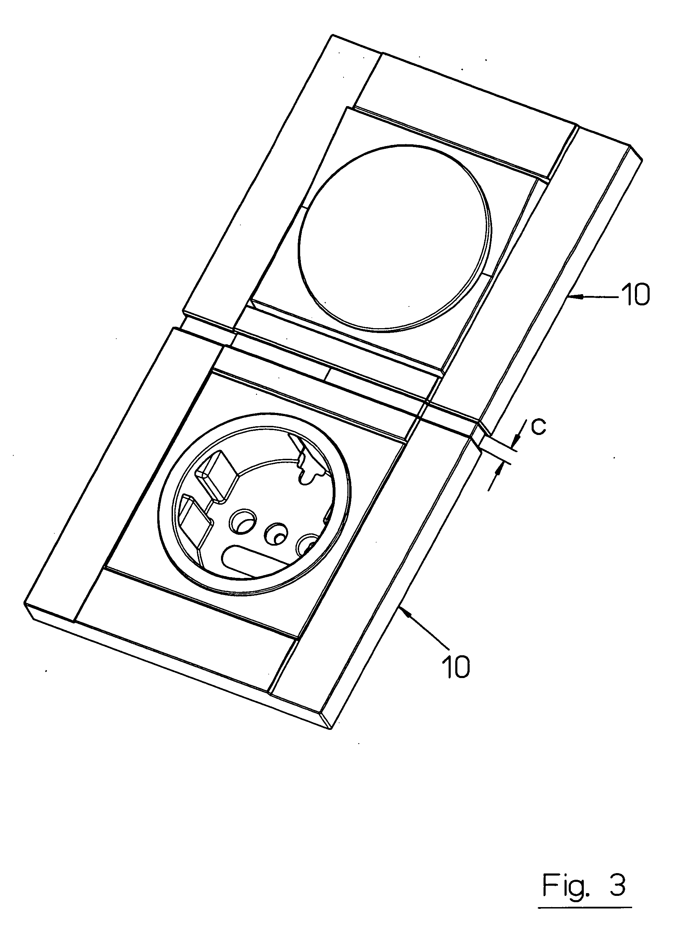

Figur 3 zeigt anschaulich einen Zweifachabdeckrahmenaufbau gemäß der Erfindung, der zur Abdeckung einer Steckdose und eines danebenliegenden Schalters dient, wobei der Geräteabstand gegenüber dem vorgesehenen Abstand vergrößert ist und der Zwischenraum zwischen den Modulen über die sich wechselseitig ergänzenden Steckanschlußabschnitte um die Breite c überbrückt ist.

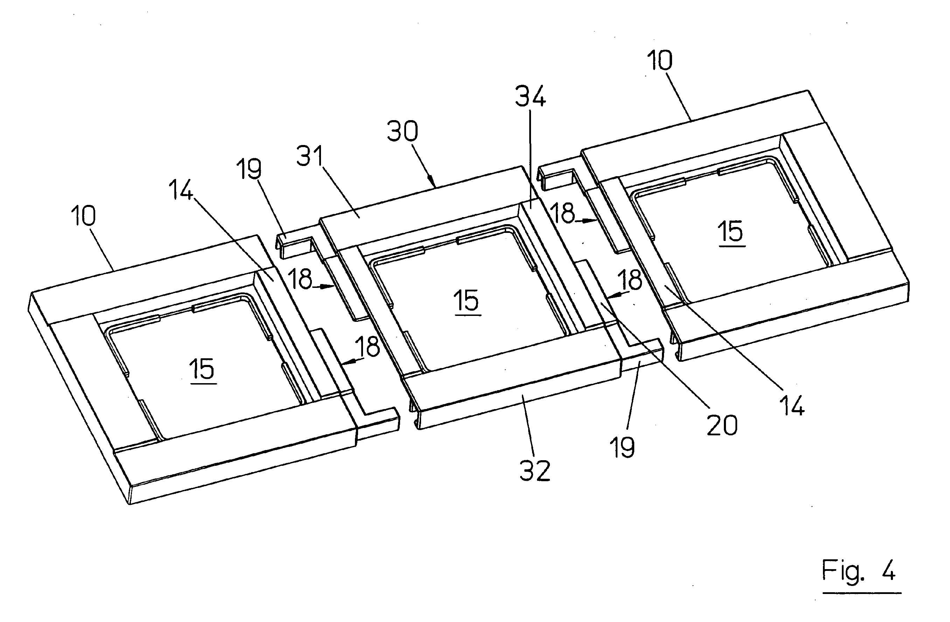

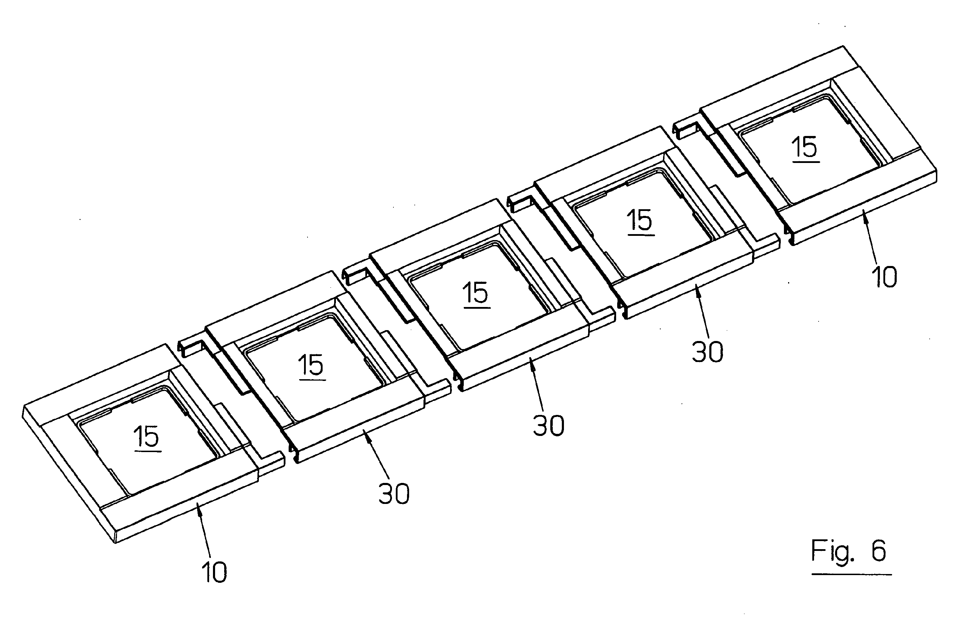

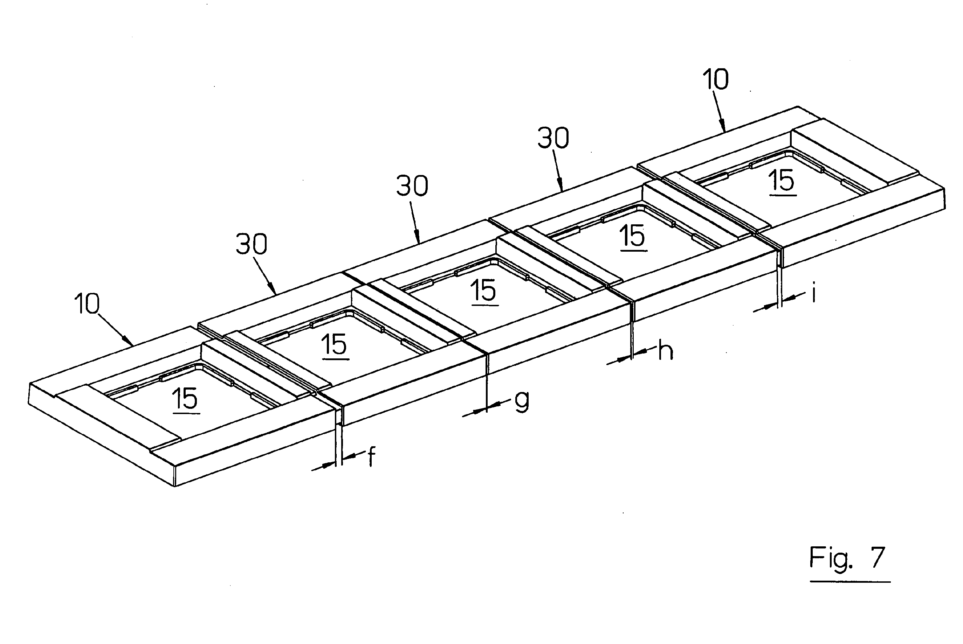

Figur 4 zeigt die Module für den Aufbau eines Dreifachabdeckrahmens. Die Module bestehen aus den beiden endseitigen Grundteilmodulen 10 und einem Mittelteilmodul 30. Das Mittelteilmodul 30 ist mit zwei gegenüberliegenden Seitenprofilabschnitten 31 und 32 und zwei Seitenprofilabschnitten 33 und 34 gebildet, die, wie das Modul 10, Steckanschlußabschnitte 18 aufweisen, welche an dem Modul 30 drehsymmetrisch derart angeordnet sind, daß sie zu komplementären Steckanschlußabschnitten 18 der Grundteilmodule 10 und zu Steckanschlußabschnitten weiterer Mittelteilmodule 30, wie in den Figuren 6 und 7 gezeigt, passen.

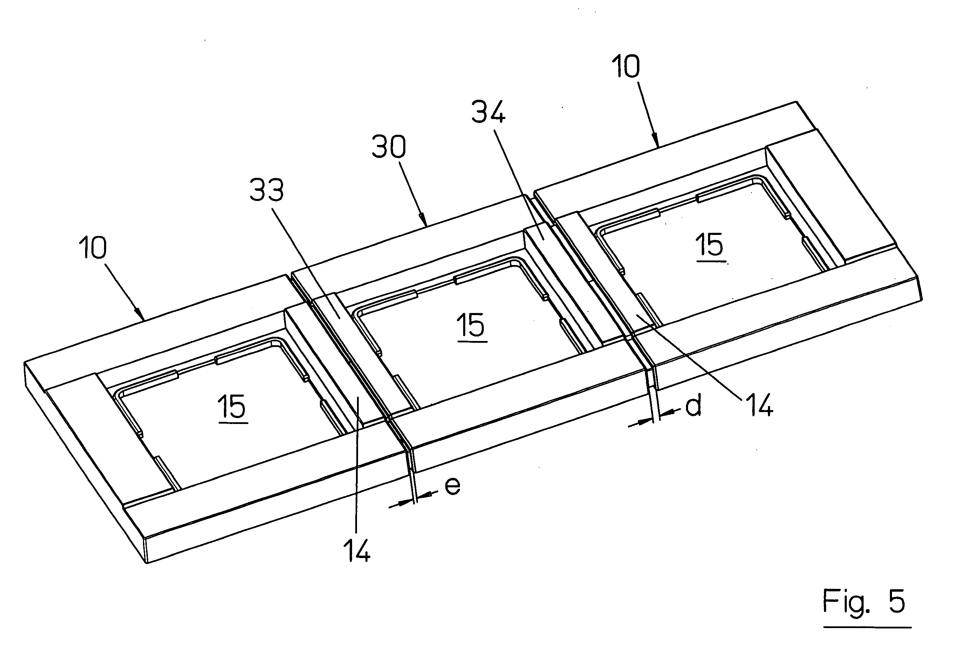

Figur 5 zeigt den Aufbau des Abdeckrahmens gemäß Figur 4 in einem zusammengesteckten Zustand, wobei die Abstände zwischen den Seitenrahmenprofilabschnitten 14 und 33 mit e und den Seitenrahmenprofilabschnitten14 und 34 mit d bezeichnet sind.

Die Figuren 6 und 7 zeigen ein weiteres Ausführungsbeispiel eines erfindungsgemäßen Rahmenaufbaus mit insgesamt fünf Modulen, zwei Endmodulen 10 und drei dazwischen angeordneten Mitteilteilmodulen 30. Die Module 10 und 30 sind wie bei den zuvor dargestellten Ausführungsbeispielen mit zueinander komplementären Steckanschlußabschnitten 18 ausgebildet, die wechselseitig überlappende Abdeckprofile 19, 20, siehe Figur 1, aufweisen. Figur 7 zeigt den Fünffachabdeckrahmenaufbau aus Modulen 10 und 30 gemäß Figur 6 in einem zusammengesetzten Zustand, wobei verschiedene Abstände zwischen den Dosenöffnungen 15, die mit den Modulen 10 bzw. 13 abzudecken sind, mit den Buchstaben f bis i angegeben sind. Auch hier ist ein einheitliches Erscheinungsbild durch die wechselseitig überlappenden Abdeckprofile der Steckanschlußabschnitte gewährleistet.

In nicht dargestellter Weise kann der Abstand zwischen zwei Modulen auch durch stufenweise Verrastung des Einsteckprofils in der komplementären Ausnehmung vorgesehen sein, und durch die formstabile Ausbildung der Einsteckprofile 19 und der zugeordneten komplementären Ausnehmungen 22 wird ergänzend zu der wechselseitigen Anlageführung der flächigen Abdeckprofile 20 auch eine große Formstabilität des erfindungsgemäßen Abdeckrahmensaufbaus auch bei längeren Gestaltungen realisiert.

## Patentansprüche

1. Abdeckrahmenaufbau für unter Putz installierbare elektrische Geräte, bestehend aus einem Grundteilmodul (10), das bei einer Anordnung von wenigstens zwei elektrischen Geräten als Anfangs- und als Endstück vorgesehen ist, und aus
einem Mittelteilmodul (30), das bei der Anordnung von wenigstens drei elektrischen Geräten als Mittelstück vorgesehen ist,
wobei das Grundteilmodul (10) einen und das Mittelteilmodul (30) zwei um 180° versetzte Steckanschlußabschnitte (18) aufweisen, die über eine veränderbare Einstecktiefe unter Abdeckung des Bereichs zwischen benachbarten Modulen (10, 30) miteinander in Eingriff bringbar sind.

2. Aufbau nach Anspruch 1, **dadurch gekennzeichnet, daß** die Steckanschlußabschnitte (18) zwei aneinandergesteckter Module (10, 30) wechselseitig überlappende Abdeckprofile (19, 20) aufweisen.

3. Aufbau nach Anspruch 1 oder 2, **dadurch gekennzeichnet, daß** jeder Steckanschlußabschnitt (18) ein vorstehendes vorzugsweise seitliches Einsteckprofil (19), ein sich daran anschließendes bis zur Hälfte der Seite erstreckendes flächiges vorstehendes Abdeckprofil (20), eine komplementäre Ausnehmung (21) für die Aufnahme des flächigen Abdeckprofils (20) des nächsten Moduls, und ein komplementäres Aufnahmeprofil (22) für das Einsteckprofil des nächsten Moduls aufweist.

4. Aufbau nach Anspruch 3, **dadurch gekennzeichnet, daß** jedes Einsteckprofil (19) in verschiedenen Einstecktiefen in das Aufnahmeprofil einsetzbar ist.

5. Aufbau nach Anspruch 3 oder 4, **dadurch gekennzeichnet, daß** jedes Einsteckprofil in verschiedene Einstecktiefen in das Aufnahmeprofil (20) reibschlüssig oder/und verrastbar einsetzbar ist.

6. Aufbau nach einem der vorangehenden Ansprüche, **dadurch gekennzeichnet, daß** die Verbindungselemente jedes Steckanschlußabschnitts (18) unterhalb der Abdeckrahmenfläche angeordnet sind.

7. Aufbau nach einem der Ansprüche 3 bis 6, **dadurch gekennzeichnet, daß** das Einsteckprofil (19) eine flächige Oberseite aufweist, die bündig mit der Fläche des Abdeckprofils (20) verläuft.

8. Aufbau nach einem der Ansprüche 3 bis 7, **dadurch gekennzeichnet, daß** das Einsteckprofil (19) im Randbereich (12, 31) jedes Moduls (10, 30) gebildet ist.

9. Aufbau nach einem der vorangehenden Ansprüche, **dadurch gekennzeichnet, daß** die Breite des Rahmens jedes Moduls (10, 30) an jeder Seite, an der ein Einsteckanschlußabschnitt (18) gebildet ist, etwa die Hälfte der sonstigen Rahmenbreite beträgt.

10. Aufbau nach einem der vorangehenden Ansprüche, **dadurch gekennzeichnet, daß** die Module (10, 30) annähernd quadratisch ausgebildet sind.
